(19) Europäisches Patentamt
European Patent Office
Office européen des brevets

(11) Veröffentlichungsnummer: **0 006 972**
**B1**

(12) **EUROPÄISCHE PATENTSCHRIFT**

(45) Veröffentlichungstag der Patentschrift: **24.02.82**

(51) Int. Cl.³: **C 08 F 2/50**

(21) Anmeldenummer: **79101003.6**

(22) Anmeldetag: **31.03.79**

(54) **Verfahren zur Photopolymerisation.**

(30) Priorität: **15.07.78 DE 2831159**

(43) Veröffentlichungstag der Anmeldung:
**23.01.80 Patentblatt 80/2**

(45) Bekanntmachung des Hinweises auf die Patenterteilung:
**24.02.82 Patentblatt 82/8**

(84) Benannte Vertragsstaaten:
**DE FR GB IT NL**

(56) Entgegenhaltungen:
**FR - A - 1 514 512**
**FR - A - 2 141 676**
**GB - A - 622 374**

(73) Patentinhaber: **Röhm GmbH**
**Kirschenallee**
**D-6100 Darmstadt (DE)**

(72) Erfinder: **Hitzler, Otto**
**Wilhelm-Leuschner-Strasse 57**
**D-6106 Erzhausen (DE)**
Erfinder: **Wunderlich, Winfried, Dr.**
**Spessartring 11**
**D-6101 Rossdorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 006 972 B1

# Verfahren zur Photopolymerisation

Aus der DE—OS 21 30 070 ist ein Verfahren zur Photopolymerisation äthylenisch ungesättigter Verbindungen in Gegenwart von Azoverbindung bekannt, die bei Temperaturen im Bereich von 20 bis 100° durch Licht im Wellenlägenbereich von 200 bis 500 nm zum radikalischen Zerfall angeregt werden, bei Ausschluß von Licht jedoch erst bei 150 bis 300°C radikalisch zerfallen. Azoinitiatoren dieser Art, z.B. 2,2'-Azo-bis-isobutylacetat, gestatten es, die Polymerisation ungesättigter Verbindungen bei Temperaturen unter 100° streng proportional zur eingestrahlten Lichtmenge durchzuführen. Dadurch wird ein unerwünschter Temperaturanstieg während der Polymerisation vermieden, wenn die Intensität des eingestrahlten Lichts ständig so bemessen wird, daß ein thermischer Zerfall des Azoinitiators nicht eintritt. Verwendet man andere, durch Licht anregbare Azoinitiatoren, wie Azo-bis-isobuttersäurenitril, so beginnt schon bei verhältnismäßig niedriger Temperatur der thermische Zerfall des Initiators. Die thermisch erzeugten Radikale lösen die Polymerisation der ungesättigten Verbindungen aus und bewirken einen ständigen Temperaturanstieg, der durch fortschreitende Beschleunigung des Initiatorzerfalls bis zum explosiven Verlauf fortschreiten kann.

Die allein über die eingestrahlte Lichtmenge beherrschbare Photopolymerisation mit Azoinitriatoren der letztgenannten Art ist auf einen Temperaturbereich beschränkt, der deutlich unter dem Bereich des thermischen Zerfalls des Azoinitiators liegt, beispielsweise 20°C oder weniger. Bei so niedrigen Temperaturen verläuft die Polymerisation jedoch unerwünscht langsam. Erst die gemäß der DE—OS 21 30 070 verwendeten Azoinitiatoren mit einer hohen Zerfallstemperatur gestatten die allein über die Lichtmenge beherrschte Polymerisation bei günstigen Polymerisationstemperaturen. Die genannten Azoinitiatoren sind jedoch nur schwierig herstellbar und teuer.

Aufgabe der vorliegenden Erfindung ist es, die Photopolymerisation von äthylenisch ungesättigten, radikalisch polymerisierbaren Verbindungen in Gegenwart von anderen Azoverbindungen unter Einwirkung von Licht mit einer Wellenlänge von 200 bis 500 nm mit einer solchen Lichtintensität durchzuführen, daß die Polymerisation bei Temperaturen unter 100°C abläuft. Die gestellte Aufgabe wird erfindungsgemäß durch die Verwendung der in den Ansprüchen genannten Azoalkane gelöst. Sie gestatten ebenso wie z.B. Azo-bis-isobutylacetat die über die Lichtintensität beherrschte Photopolymerisation, sind aber einfacher herstellbar und infolgedessen billiger.

Die erfindungsgemäß verwendeten Azoinitiatoren sind aus J. Hinz und Chr. Rüchardt, Liebigs Ann. Chem. 1972, Bd 765, S. 95 bis 109 und W. Duismann, R. Hertel, J. Meister un Ch. Rüchard, Liebigs Ann. Chem. 1976, S. 1820—1833, bekannt, und werden dort als thermische Radikalbildner beschrieben. Für die photochemische Polymerisation erwies sich das niedrigste der von Rüchardt beschriebenen Homologen mit $C_4$-Alkylresten als unbefriedigend; vgl. Kurve 3 in Abb. 1. Bei der thermolytischen Spaltung nimmt die Zerfallsgeschwindigkeit mit dem Molekulargewicht des Alkanrestes zu. Das gilt nicht in gleicher Weise für die photolytische Spaltung, wie Versuche mit dem entsprechenden Homologen mit $C_7$-Alkylresten ergeben haben. Sie verliefen, wie Kurve 4 in Abb. 1 zeigt, noch unbefriedigender als mit dem $C_4$-Homologen. Überraschenderweise liegt zwischen den untersuchten $C_4$- und $C_7$-Homologen ein Maximum der photolytischen Zerfallsgeschwindigkeit, das wegen der vom thermolytischen Zerfall abweichenden Gesetzmäßigkeit nicht zu erwarten war. Es gilt, wie die Kurven 1 und 2 in Abb. zeigen, für bestimmte $C_5$- bis $C_7$-Homologe. Sie enthalten zwei gleiche, an die Azogruppe gebundene tertiäre aliphatische Kohlenwasserstoffreste mit einem Molekulargewicht von 71 bis 97. Das an die Azogruppe gebundene Kohlenstoffatom ist tertiär, d.h. es trägt drei aliphatische Reste, von denen gegebenenfalls zwei zu einem Ring verbunden sein können. Die Kohlenwasserstoffreste enthalten mindestens 5 und höchstens 7 Kohlenstoffatome, im letztgenannten Fall handelt es sich um tertiäre Kohlenwasserstoffreste der Formel $C_7H_{13}$, die eine Ringstruktur enthalten während Kohlenwasserstoffreste $C_7H_{15}$ ohne Ringstruktur ungeeignet sind.

Bevorzugte Azoalkane entsprechen der Formel

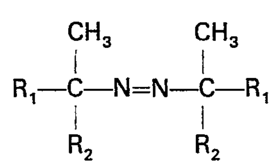

wobei entweder $R_1$ eine Methylgruppe und $R_2$ eine Äthyloder Propylgruppe oder $R_1$ und $R_2$ zusammengenommen eine Tetramethylen- oder Pentamethylengruppe bedeuten.

2,2'-Azo-bis-2-methyl-butan und 2,2'-Azo-bis-2-methylpentan sind besonders bevorzugt.

Die Azoalkane werden vorzugsweise in einer Menge von 0,001 bis 1 g je 100 g der polymerisierbaren Verbindung eingesetzt. Die erfindungsgemäß verwendeten Azoalkane sind auf einfache Weise nach dem von R. Ohme und E. Schmitz in Angewandte Chemie 77, 1965, Seite 429, beschriebenen Verfahren zugänglich. Man geht von den entsprechenden Alkylaminen aus, wandelt sie in die entsprechendn Schwefelsäure-dialkylamide um und oxydiert sie mit

Hypochlorit zu den entsprechenden Azoalkanen. Das Herstellungsverfahren ist nicht Gegenstand der Erfindung.

Das Verfahren der Erfindung ist nicht auf ein bestimmtes Polymerisationsverfahren beschränkt. Man kann z.B. Lösungs- oder Perlpolymerisationen unter Lichteinwirkung durchführen. Vorzugsweise wird das Verfahren jedoch zur Polymerisation von ungesättigten Verbindungen in Substanz, insbesondere in Schichtdicken von 30 bis 300 mm, angewendet, weil gerade bei diesen Verfahren wegen der schwierigen Kühlung die Beherrschung der Polymerisationstemperatur mittels der Lichtmenge besonders wichtig ist.

Die beim Zerfall von Azoverbindungen entstehenden Radikale eignen sich bekanntlich zur Polymerisation aller äthylenisch ungesättigten, radikalisch polymerisierbaren Verbindungen, daher ist auch das erfindungsgemäße Verfahren ohne Einschränkung auf alle derartigen Verbindungen und ihre Gemische oder Lösungen anwendbar. Das bevorzugte Anwendungsgebiet der Erfindung, besonders im Hinblick auf die Polymerisation in Substanz, besteht in der Polymerisation von Acryl- und/oder Methacrylverbindungen oder überwiegend daraus bestehenden Gemischen verschiedener polymerisierbarer Verbindungen. Unter den Methacrylverbindungen kommt dem Methacrylsäuremethylester die größte Bedeutung zu.

Die Polymerisation kann zwar bei niedrigen Temperaturen, z.B. 20°C durchgeführt werden, technisch vorteilhafter sind jedoch Polymerisationstemperaturen im Bereich von 50 bis 100°. Man verfährt im allgemeinen so, daß man unter vollem Einsatz der bestehenden Kühlmöglichkeiten die Temperatur soweit ansteigen läßt, daß der Siedepunkt der Monomeren noch nicht erreicht wird und hält dann durch Aus- und Einschalten der Lichtquelle die Polymerisationstemperatur auf gleicher Höhe. Dies läßt sich gegebenenfalls mittels einer durch Temperaturfühler gesteuerten Schaltvorrichtung selbsttätig durchführen.

Das Verfahren wird durch die nachfolgenden Beispiele näher erläutert, ist aber nicht auf diese Ausführungsformen beschränkt.

*Herstellung von Azoalkanen*

A) 2,2′-Azo-bis-methylbutan.

119,2 g (0,5 Mol) 2,2′-Sulfamib-bis-2-methylbutan (aus N-tert.-pentylamin und $SO_2Cl_2$ in Pentan) werden zu einer Lösung von 40 g NaOH in 1500 ml 12,5 %iger Natriumhypochloritlösung gegeben und nach Zugabe von 400 ml n-Pentan mit 40 ml tert.-Butanol 24 Std. bei 35°C gerührt. Dann wird die Pentan-Phase abgetrennt, die wäßrige Phase dreimal mit je 100 ml n-Pentan extrahiert und die vereinigten Pentanlösungen getrocknet. Destillation im Vakuum ergibt in hoher Ausbeute 2,2′-Azo-bis-2-methylbutan, Sdp.$_{5,0}$ 54°; $n_D^{20} = 1,4300$.

B) 1,1′-Dimethyl-azocyclopentan.

26 g (0,1 Mol) 1,1′-Sulfamido-bis-1-methylcyclopentan (aus 1-Methyl-cyclopentylamin, Herst. s. J. Hinz, C. Rüchardt, Liebigs Ann. Chem. *765,* 94 (1972), und $SO_2Cl_2$ in Pentan) werden zu einer Lösung von 8,0 g NaOH in 300 ml 12,5 %iger Natriumhypochlorit-Lösung gegeben und nach Zusatz von 80 ml n-Pentan und 8 ml tert.-Butanol 24 Std. bei 35—40°C gerührt. Isolierung der Azoverbindung, wie im vorigen Beispiel beschrieben, ergibt eine gelbliche Flüssigkeit, $n_D^{20} = 1,4650$.

C) 2,2′-Azo-bis-2-methylpropan.

67,5 g (0,5 Mol) Sulfurylchlorid, in 75 ml n-Pentan gelöst, werden im Verlaufe von 3 Std. zu einer Lösung von 146,2 g (2 Mol) tert.-Butylamin in 250 ml n-Pentan bei 5—20°C getropft. Nach der Reaktion werden langsam 200 ml dest. Wasser zugegeben, der Niederschlag abgesaugt, mit Wasser gewaschen und getrocknet. Ausbeute: 70% d.Th., Schmp. nach Umkristallisation aus Benzol: 141°C.

Das Sulfamid wird wie oben beschrieben mit Natriumhypochlorit zur Azoverbindung oxidiert und diese nach Destillation, Sdp.$_{56}$ 40°, in 75 %iger Ausbeute erhalten, $n_D^{20} = 1,3961$.

D) 2,2′-Azo-bis-2,4,4-trimethyl-pentan.

57,7 g (0,18 Mol) 2,2′-Sulfamido-bis-2,4,4-trimethyl-pentan, hergestellt wie in den vorigen Beispielen beschrieben, Schmp. 80°, werden mit Natriumhypochlorit-Lösung 20 Std. bei 35°C oxidiert. Das isolierte Produkt, 2,2′-Azo-bis-2,4,4-trimethyl-pentan, wird durch Destillation im Vakuum gereinigt; Ausbeute: 50% d.Th., Sdp.$_{0,8}$ 88°C, $n_D^{20} = 1,4450$.

*Polymerisationsbeispiele*

Beispiel 1

Eine 3-molare Methylmethacrylatlösung in Benzol wurde mit 0,02 Mol/1 2,2′-Azo-bis-2-methylbutan unter Einwirkung von Licht im Wellenlängenbereich von 300 bis 400 nm einer UV-Lampe (Philips TLA 20 W/05) bei 80°C polymerisiert.

Der Zeit-Umsatzverlauf ist in Abb. 1 dargestellt. Man erhält eine Polymerisationsgeschwindigkeit (1), die mehr als doppelt so hoch ist, wie diejenige, die unter gleichen Bedingungen mit gleicher Menge 2,2′-Azo-bis-2-methylpropan (3) bzw. 2,2′-Azo-bis-2-methylhexan (4) erreicht wird. Der Zeit-Umsatzverlauf dieser Polymerisationen ist ebenfalls in Abb. 1 dargestellt.

Beispiel 2

Versuch 1 wird mit dem Unterschied wiederholt, daß anstelle von 2,2′-Azo-bis-2-methylbutan das 2,2′-Azo-bis-2-methylpentan eingesetzt wird. Es ergibt sich der in Abb. 1 als Kurve (2) dargestellte Polymerisationsverlauf.

Beispiel 3

Versuch 1 wird mit dem Unterschied wiederholt, daß anstelle von Methylmethacrylat n-Butylacrylat polymerisiert wird. Die Brutto - Polymerisationsgeschwindigkeit war 3,1% $\cdot min^{-1}$. Der Zeit-Umsatzverlauf dieser Reaktion ist ebenfalls in Abb. 1 als Kurve (5) dargestellt.

Beispiel 4

Eine 3-molare Styrollösung in Benzol wurde mit 2,2'-Azo-bis-2-methylbutan unter den in Beispiel 1 angegebenen Bedingungen polymerisiert. Man erhält mit dem Initiator 2,2'-Azo-bis-2-methylbutan eine deutlich höhere Polymerisationsgeschwindigkeit (1) als mit 2,2'-Azo-bis-2-methylpropan (2). Die Zeit-Umsatzfunktionen dieser beiden Polymerisationsreaktionen sind in Abb. 2 Als Kurven (1) und (2) dargestellt.

Beispiel 5

Methylmethacrylat wird unter Sauerstoffausschluß mit 0,01% 2,2'-Azo-bis-isovaleronitril und 0,005% 2,2'-Azo-bis-2-methylpentan unter Druck adiabatisch von 25°C ausgehend polymerisiert. Die Temperatur steigt auf etwa 110°C. Dabei zerfällt das 2,2'-Azo-bis-valeronitril völlig, so daß die Polymerisation abgestoppt wird. Die Endpolymerisation der Probe erfolgt nach Abkühlen der Probe auf Zimmertemperatur durch Lichteinwirkung auf das noch unzersetzte 2,2'-Azo-bis-2-methylpentan. Die Temperatur in der polymerisierenden Masse wird durch eine Dosierung der Strahlung geregelt. Ersetzt man 2,2'-Azo-bis-2-methylpentan durch 2,2'-Azo-bis-2,4,4-trimethylpentan, das eine geringere thermische Stabilität besitzt, so gerät die Polymerisation bereits in der ersten Stufe außer Kontrolle.

Beispiel 6

Methylmethacrylat wird unter Lichteinwirkung mit 0,01 Gew.-% 2,2'-Azo-bis-2-methylbutan bei 16°C Badtemperatur in einer Schichtdicke von 12 cm polymerisiert. Bei einer Umsatzgeschwindigkeit von 2%. $Stunde^{-1}$ stellt sich dabei eine Innentemperatur von 20°C ein, bis ein Umsatz von etwa 30% erreicht ist. Danach steigt die Innentemperatur rasch an und wird durch Reduzieren der eingestrahlten Lichtenergie bei 60—70°C konstant gehalten. Sobald etwa 80% Umsatz erreicht sind, wird die Lichtenergie wieder erhöht und bei etwa 110°C die Endpolymerisation durchgeführt. Der entstandene Block ist optisch klar und zeigt keine Blaseneinschlüsse. Das ist nicht der Fall, wenn der Fotoinitiator 2,2'-Azo-bis-2-methylbutan durch 2,2'-Azo-bis-2,4,4-trimethylpentan ersetzt wird. In diesem Fall läßt sich die Innentemperatur des Blockes nach einem Umsatz über 30% nicht mehr durch Verminderung der Lichteinstrahlung unter 70°C halten. Vielmehr gerät die Polymerisation durch thermischen Initiatorzerfall außer Kontrolle, und die Temperatur steigt auf über 150°C. Es entsteht ein blasiges Endprodukt.

**Patentansprüche**

1. Verfahren zur Photopolymerisation von äthylenisch ungesättigten, radikalisch polymerisierbaren Verbindungen in Gegenwart von Azoverbindungen, wobei Licht mit einer Wellenlänge von 200 bis 500 nm in einer solchen Intensität eingestrahlt wird, daß die Polymerisation bei Temperaturen unter 100°C stattfindet, dadurch gekennzeichnet, daß als Azoverbindungen symmetrische Azoalkane verwendet werden, die an die Azogruppe gebundene tertiäre aliphatische Kohlenwasserstoffreste mit einem Molekulargewicht von 71 bis 97 enthalten.

2. Verfahren nach Anspruch 1, dadurch gekennzeichnet, daß die Azoalkane in einer Menge von 0,001 bis1 g je 100 g der polymerisierbaren Verbindungen eingesetzt werden.

3. Verfahren nach Ansprüchen 1 und 2, dadurch gekennzeichnet, als Azoalkane Verbindungen der Formel

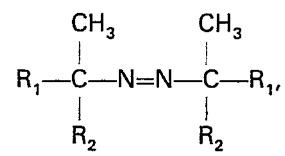

wobei entweder $R_1$ eine Methylgruppe und $R_2$ eine Äthyl- oder Propylgruppe oder $R_1$ und $R_2$ zusammengenommen eine Tetramethylen- oder Pentamethylengruppe bedeuten, eingesetzt werden.

4. Verfahren nach Anspruch 3, dadurch gekennzeichnet, daß als Azoalkane 2,2'-Azo-bis-2-methylbutan oder 2,2'-Azobis-2-methylpentan eingesetzt werden.

5. Verfahren nach Ansprüchen 1 bis 4, dadurch gekennzeichnet, daß als polymerisierbare Verbindungen überwiegend Acryl- und/oder Methacrylverbindungen eingesetzt werden.

6. Verfahren nach Anspruch 5, dadurch gekennzeichnet, daß als Methacrylverbindung Methacrylsäuremethylester eingesetzt wird.

**Revendications**

1. Procédé pour la photopolymérisation de composés éthyléniquement insaturés, susceptibles de polymérisation radicalaire, en présence de composés azoïques, de la lumière de longueur d'onde comprise entre 200 et 500 nm étant irradiée avec une intensité telle que la polymérisation se produise à des températures inférieures à 100°C, caractérisé en ce qu'on utilise, en tant que composés azoïques, des azoalcanes symétriques qui contiennent des radicaux hydrocarbonés aliphatiques tertiaires de poids moléculaire compris entre 71 et 97, fixés au groupe azoïque.

2. Procédé selon la revendication 1, caractérisé en ce que les azoalcanes sont utilisés dans une proportion de 0,001 à 1 g pour 100 g des composés polymérisables.

3. Procédé selon la revendication 1 ou 2, caractérisé en ce qu'on utilise, en tant qu'azoalcanes, des composés de formule

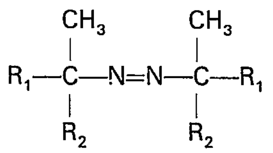

dans laquelle ou bien $R_1$ est un groupe méthyle et $R_2$ un groupe éthyle ou propyle, ou bien $R_1$ et $R_2$ pris ensemble représentent un groupe tétraméthylène ou pentaméthylène.

4. Procédé selon la revendication 3, caractérisé en ce qu'on utilise, en tant qu'azoalcanes, le 2,2'-azo-bis-2-méthylbutane ou le 2,2'-azo-bis-2-méthylpentane.

5. Procédé selon l'une quelconque des revendications 1 à 4, caractérisé en ce qu'on utilise avant tout, en tant que composés polymérisables, des composés acryliques et/ou méthacryliques.

6. Procédé selon la revendication 5, caractérisé en ce qu'on utilise, en tant que composé méthacrylique, l'ester méthylique d'acide méthacrylique.

## Claims

1. Process for the photopolymerisation of ethylenically unsaturated, radically polymerisable compounds in the presence of azo compounds, wherein light with a wavelength of 200 to 500 nm is radiated in with an intensity such that polymerisation occurs at temperatures below 100°C, characterised in that symmetrical azoalkanes having tertiary aliphatic hydrocarbon radicals with a molecular weight of 71 to 97 bonded to the azo group are used as the azo compounds.

2. Process as claimed in claim 1, characterised in that the azoalkanes are used in an amount of from 0.001 to 1 g per 100 g of the polymerisable compounds.

3. Process as claimed in claims 1 and 2, characterised in that compounds of the formula

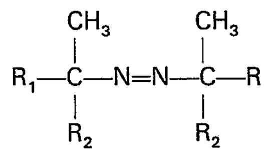

wherein either $R_1$ represents a methyl group and $R_2$ represents an ethyl or propyl group or $R_1$ and $R_2$ together represent a tetramethylene or pentamethylene group, are used as the azoalkanes.

4. Process as claimed in claim 3, characterised in that 2,2'-azo-bis-2-methylbutane or 2,2'-azo-bis-2-methylpentane is used as the azoalkane.

5. Process as claimed in claims 1 to 4, characterised in that acrylic and/or methacrylic compounds are predominantly used as the polymerisable compounds.

6. Process as claimed in claim 5, characterised in that methyl methacrylate is used as the methacrylic compound.

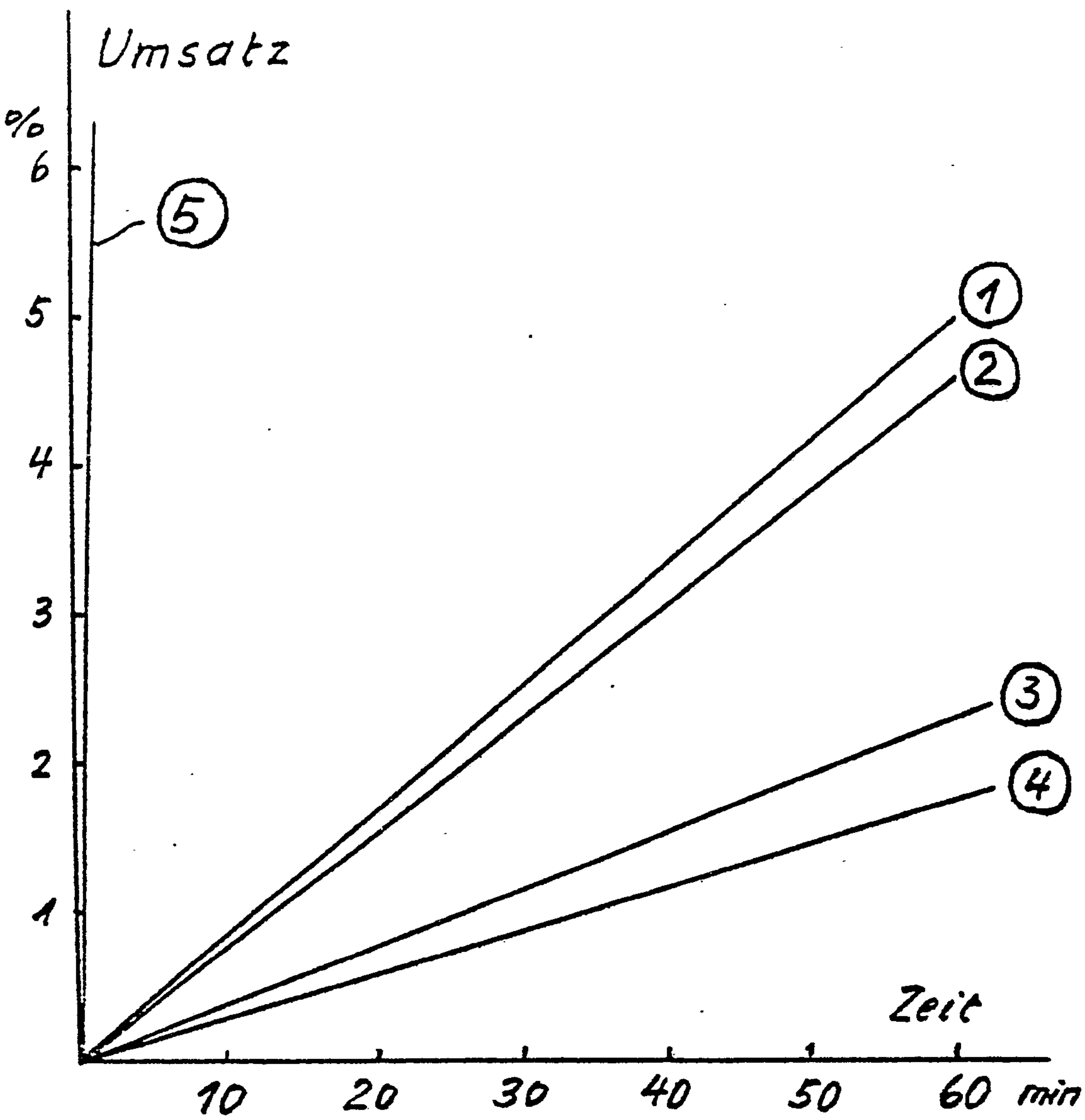


Abb. 1

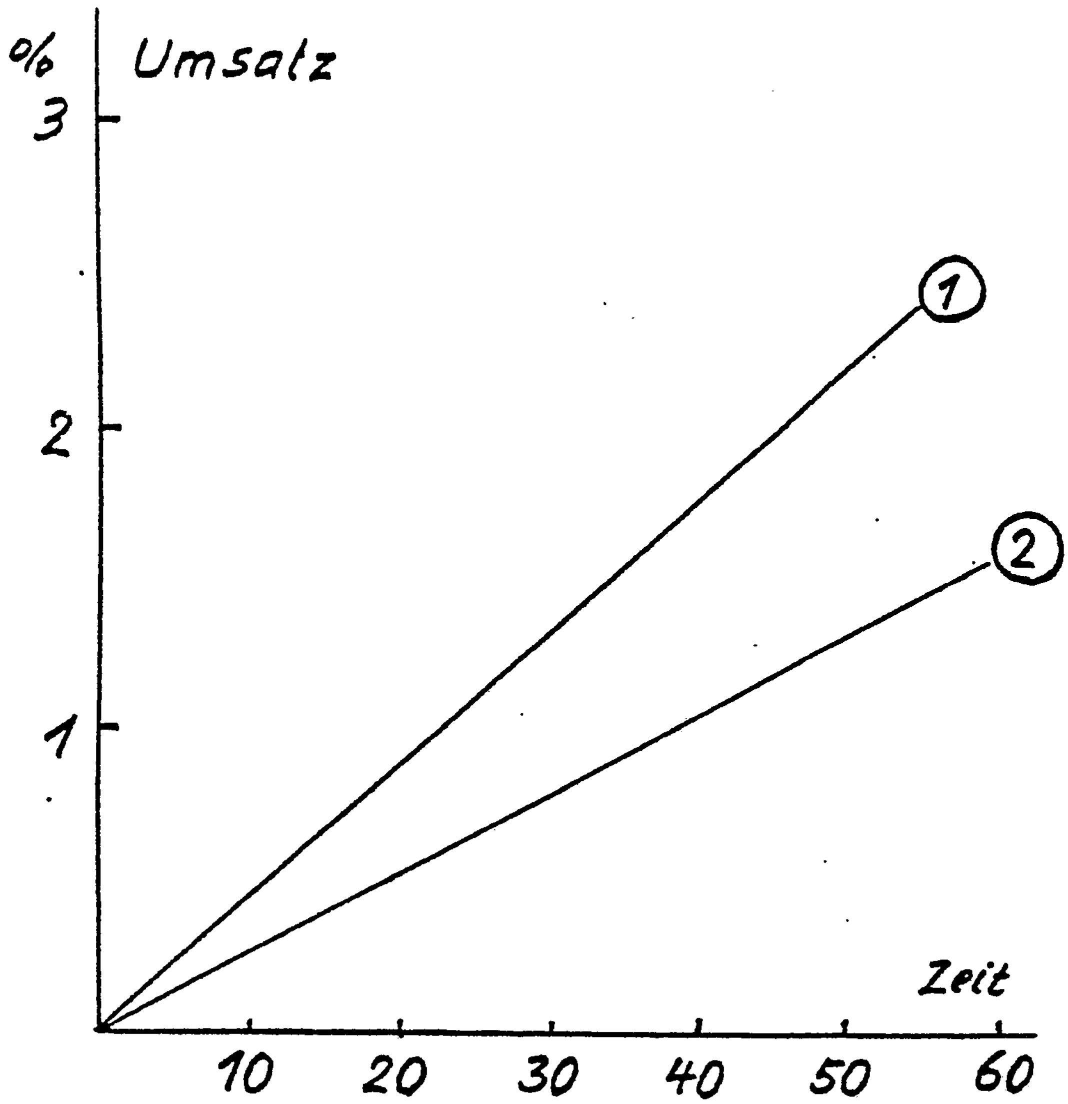


Abb. 2